(19) Europäisches Patentamt
European Patent Office
Office européen des brevets

(11) **EP 3 277 998 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **16712322.3**

(22) Anmeldetag: **24.03.2016**

(51) Int Cl.:
*F16L 55/027* (2006.01)     *F15D 1/02* (2006.01)
*G01F 1/42* (2006.01)     *G01F 1/684* (2006.01)

(86) Internationale Anmeldenummer:
**PCT/EP2016/056537**

(87) Internationale Veröffentlichungsnummer:
**WO 2016/156196 (06.10.2016 Gazette 2016/40)**

(54) **STRÖMUNGSGLEICHRICHTER**

FLOW CONDITIONER

CONDITIONNEUR D'ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2015 DE 102015105058**

(43) Veröffentlichungstag der Anmeldung:
**07.02.2018 Patentblatt 2018/06**

(73) Patentinhaber: **Endress + Hauser Flowtec AG
4153 Reinach (CH)**

(72) Erfinder: **KUMAR, Vivek
4123 Allschwil (CH)**

(74) Vertreter: **Andres, Angelika Maria
Endress+Hauser (Deutschland) AG+Co. KG
PatServe
Colmarer Strasse 6
79576 Weil am Rhein (DE)**

(56) Entgegenhaltungen:
**EP-A1- 1 793 102     EP-A1- 2 068 129
DE-T2- 69 903 987     US-A- 5 529 093
US-A1- 2015 083 262**

**Beschreibung**

Die vorliegende Erfindung betrifft einen Strömungsgleichrichter nach dem Oberbegriff des Anspruchs 1.

Strömungsgleichrichter sind seit langem bekannt, um eine Strömung in eine Strömung mit bekanntem Strömungsprofil zu überführen, beispielsweise aus der US 3,840,051 , der US 5,341,848, der DE 10 2006 046 252 A1 oder der US 5,529,093 . Bekannte Ausführungsformen werden auch in dem Aufsatz "A new concept of flow conditioner under test" von B. Mickan, G. Pereira, J. Wu und D. Dopheide gezeigt.

Die DE 699 03 987 T2 offenbart einen Strömungsgleichrichter mit mehreren Löchern, die verschiedene Durchmesser aufweisen.

Ausgehend von dem vorhergehenden Stand der Technik ist es nunmehr Aufgabe der vorliegenden Erfindung eine noch bessere Strömungsoptimierung durch eine neuartige Gestaltung eines Strömungsgleichrichters zu erreichen.

Ein erfindungsgemäßer Strömungsgleichrichter umfasst eine Lochplatte mit einem zentralen Loch und vier oder mehr radial dazu angeordnete Kreisbahnen die konzentrisch zueinander angeordnet sind, wobei auf diesen konzentrischen Kreisbahnen Löcher angeordnet sind. Die überwiegende Zahl der Löcher einer mittleren Kreisbahn weist einen größeren Lochdurchmesser gegenüber der überwiegenden Zahl an Löcher der innersten und der überwiegenden Zahl an Löcher der äußersten Kreisbahn auf.

Bislang wurden die Lochdurchmesser in den meisten Strömungsgleichrichterplatten von außen nach innen kontinuierlich kleiner oder größer. Durch den großen Lochdurchmesser auf einer oder mehreren mittleren Kreisbahnen wird eine schnelle Ausmischung auf endgültige Massenstromverteilung in der Mitte des Strömungsprofils erreicht.

Vorteilhafte Ausgestaltungen sind Gegenstand der Unteransprüche.

Die Löcher sind vorzugsweise zylindrisch in der Lochplatte ausgebildet. Es sind auch Löcher mit kegelförmigen Verlauf bekannt. Diese haben sich aber als weniger günstig erwiesen.

Die Unterschiede der Löcher der Kreisbahnen sollten nicht zu stark voneinander differieren. In dem Strömungsgleichrichter ist, ausgehend vom zentralen Loch (1), die innerste Kreisbahn (2) mit mehreren Löchern (8) angeordnet, wobei das Verhältnis $r_8/D_i$ also das Verhältnis des Radius eines jeweiligen Loches (8) dieser innersten Kreisbahn (2) bezogen auf Di den Gesamtdurchmesser der Lochplatte (6), um 2-10% grösser ist als das Verhältnis $r_1/D_i$ also das Verhältnis des Radius des Loches (1) bezogen auf Di den Gesamtdurchmesser der Lochplatte (6).

Zusätzlich oder alternativ ist es von Vorteil, wenn ausgehend vom zentralen Loch (1) die innerste Kreisbahn (2) mit den mehreren Löchern (8) angeordnet ist, wobei

das Verhältnis $r_8/D_i$ also das Verhältnis des Radius eines Loches (9) einer dieser innersten Kreisbahn (2) nachfolgenden zweiten Kreisbahn (3) bezogen auf Di den Gesamtdurchmesser der Lochplatte (6), um 2-10% grösser ist als das Verhältnis $r_{10}/D_i$ also das Verhältnis des Radius eines Loches (10) einer der nachfolgenden zweiten Kreisbahn (3) in radialer Richtung nachfolgenden dritten Kreisbahn bezogen auf Di den Gesamtdurchmesser der Lochplatte (6).

Zusätzlich oder alternativ ist es zudem von Vorteil, wenn das Verhältnis $r_9/D_i$ also das Verhältnis des Radius eines jeweiligen Loches (9 und/oder 10) einer mittleren Kreisbahn (3 oder 4) bezogen auf Di den Gesamtdurchmesser der Lochplatte (6),

um 30-60% grösser ist als das Verhältnis $r_{11}/D_i$ also das Verhältnis des Radius des Loches (11) der äußersten Kreisbahn (11) bezogen auf Di den Gesamtdurchmesser der Lochplatte (6).

Für eine schnellere Strömungsprofilausbildung hat es sich zudem als günstig erwiesen, wenn die Löcher der radial äußersten Kreisbahn den kleinsten Lochdurchmesser aufweisen.

Die Löcher sind vorteilhaft auf den jeweiligen Kreisbahnen derart angeordnet, dass die Lochplatte bei Rotation um die Längsachse bzw. um das Zentrum um einen Winkel zwischen 30-60° auf sich selbst abgebildet werden kann. Diese Symmetrie hat ebenfalls einen günstigen Effekt auf die Ausbildung des Strömungsprofils.

Die Dicke der Lochlatte beträgt vorteilhaft zwischen 10 bis 15% der Länge des Durchmessers der Lochplatte.

Für eine symmetrische Ausrichtung der Strömung ist es von Vorteil, wenn auf der radial innersten Kreisbahn 8 Löcher angeordnet sind.

Es hat sich als günstig erwiesen, wenn auf einer Kreisbahn jeweils nur Löcher mit einheitlichem Lochdurchmesser angeordnet sind.

Die Löcher der Lochplatte können idealerweise einen kreisförmigen Umfang aufweisen.

Abgesehen vom zentralen Loch, können die Löcher jeder Kreisbahn einen anderen Lochdurchmesser aufweisen als die Löcher der anderen Kreisbahnen.

Der Gegenstand der Erfindung wird nachfolgend anhand einer beiliegenden Figur näher erläutert. Es zeigt:

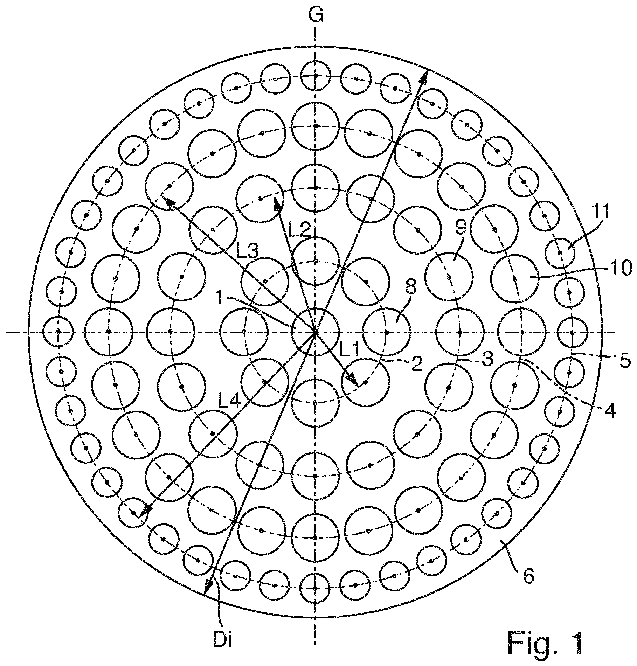

Fig. 1 Strömungsgleichrichter in einer erfindungsgemäßen Ausführungsvariante.

Die Aufgabe der Erfindung besteht darin, einen verbesserten Strömungsgleichrichter bereit zu stellen.

Lochplatten sich an sich bekannt. Sie sollen idealerweise die Ausbildung eines vollentwickeltes und axialsymmetrisches Strömungsprofils ermöglichen. Hierfür werden üblicherweise sehr lange Einlauflängen benötigt. Trotzdem kann es durch Pumpen, Vorsprünge oder Ausnehmungen an der Innenwand eines Rohres oder von Rohrübergängen zu Strömungsverwirbelungen kommen.

Die vorliegende erfindungsgemäße Lochplatte weist ein Optimum gegenüber den bisherigen Lochplatten aus dem Stand der Technik bezüglich der Ausbildung eines vollentwickelten Strömungsprofils und bezüglich der Ausbildung eines axialsymmetrischen Strömungsprofils auf.

Dabei ist die Strömung schon zu Beginn sehr nahe am ausgebildeten Profil und bildet sich danach auf Grund der gezielten Verteilung der turbulenten Störungen im Profil so schnell wie möglich aus.

Mikroverwirbelungen können bei der erfindungsgemäßen Lochplatte trotzdem auftreten, es kann jedoch bei Bedarf durch weitere Maßnahmen der Umfang an Mikroverwirbelungen verringert oder verhindert werden.

Die erfindungsgemäße Lochplatte 6 weist Löcher auf die auf konzentrischen Kreisbahnen 2 , 3, 4 und 5 um ein zentrales Loch 1 angeordnet sind, welches zentrale Loch 1 in der Mitte der Lochplatte angeordnet ist.

Vorzugsweise weist eine entsprechende Kreisbahn 2-5 ausschließlich Löcher mit einheitlichem Lochdurchmesser auf. Außerhalb der konzentrischen Kreisbahnen sind vorzugsweise keine Löcher vorhanden.

Die Löcher der jeweiligen Lochkreise sind vorzugsweise rund ausgestaltet. Sie weisen, ebenfalls bevorzugt, Lochzentren Z auf, wobei jeweils die Lochzentren Z von zwei der Löcher einer Kreisbahn auf einer Geraden G angeordnet sind, die senkrecht zur Flächennormalen der Lochplatte 6 steht.

Die Lochplatte 6 weist eine zylindrische Grundform auf mit einer, vorzugsweise kreisrunden, Zylindergrundfläche 7 und einer Längsachse, und koaxial dazu eine Mantelfläche.

Vorzugsweise findet der Strömungsgleichrichter in einem Durchflussmessgerät Anwendung.

Die in Fig. 1 dargestellte Lochplatte umfasst insgesamt 89 Löcher.

In der Mitte der Lochplatte 6 ist das zentrale Loch 1 angeordnet. Dieses Loch 1 kann ein Verhältnis $r_1/D_i$ von vorzugsweise weniger als 0,04; besonders bevorzugt von 0,038 bis 0,04; insbesondere von 0,039 aufweisen. Dabei ist r1 der Radius des Loches 1 und Di der Gesamtdurchmesser der Lochplatte 6.

Ausgehend von dem zentralen Loch 1 ist in radialer Richtung nach der Länge $L_1$ eine erste Kreisbahn 2 angeordnet, auf der insgesamt 8 Löcher 8 symmetrisch um das zentrale Loch 1 herum angeordnet sind.

Die Löcher 8 auf der ersten Kreisbahn 2 können ein Verhältnis $r_8/D_i$ von vorzugsweise mehr als 0,04 aufweisen; besonders bevorzugt von 0,041 bis 0,043; insbesondere von 0,042. Dabei ist r8 der Radius eines jeweiligen Loches 8 und Di der Gesamtdurchmesser der Lochplatte 6.

Die Löcher 8 weisen ausgehend von ihrem jeweiligen Mittelpunkt Z einen Abstand $L_8$ zur Längsachse der Lochplatte 6 auf. Das Verhältnis dieses Abstandes $L_8$ gegenüber dem Durchmesser $D_i$ der Lochplatte 6, also $L_8/D_i$ beträgt vorzugsweise zwischen 0,12 und 0,13, besonders bevorzugt zwischen 0,123 und 0,125, insbesondere 0,124. Besonders bevorzugt können die Löcher 8 der ersten Kreisbahn 2 um 5-8%, insbesondere um 6,8-7,5% größer ausgestaltet sein als das zentrale Loch, bezogen auf die Lochdurchmesser 1.

Ausgehend von der ersten Kreisbahn 2 ist in radialer Richtung eine zweite Kreisbahn 3 angeordnet, auf der insgesamt 16 Löcher 9 symmetrisch um das zentrale Loch 1 herum angeordnet sind. Die Löcher 9 auf der zweiten Kreisbahn 3 können ein Verhältnis $r_9/D_i$ von vorzugsweise mehr als 0,041 aufweisen; besonders bevorzugt von 0,042 bis 0,044; insbesondere von 0,043. Dabei ist r9 der Radius eines jeweiligen Loches 9 auf der zweiten Kreisbahn 3 und Di der Gesamtdurchmesser der Lochplatte 6. Insbesondere können die Löcher 9 der zweiten Kreisbahn 3 größer ausgebildet sein als die Löcher 8 der ersten Kreisbahn 2.

Die Löcher 9 weisen ausgehend von ihrem jeweiligen Mittelpunkt Z einen Abstand $L_9$ zur Längsachse der Lochplatte 6 auf. Das Verhältnis dieses Abstandes $L_9$ gegenüber dem Durchmesser $D_i$ der Lochplatte 6, also $L_9/D_i$ beträgt vorzugsweise zwischen 0,23 und 0,26, besonders bevorzugt zwischen 0,246 und 0,252, insbesondere 0,249. Besonders bevorzugt können die Löcher 9 der zweiten Kreisbahn 3 um 8-11%, insbesondere um 9,0-9,6% größer ausgestaltet sein als das zentrale Loch 1, bezogen auf die Lochdurchmesser.

Ausgehend von der zweiten Kreisbahn 3 ist in radialer Richtung eine dritte Kreisbahn 4 angeordnet, auf der insgesamt 24 Löcher 10 symmetrisch um das zentrale Loch 1 herum angeordnet sind. Die Löcher 10 auf der dritten Kreisbahn 4 können ein Verhältnis $r_{10}/D_i$ von vorzugsweise weniger als 0,041 aufweisen; besonders bevorzugt von 0,040 bis 0,038; insbesondere von 0,039. Dabei ist r10 der Radius eines jeweiligen Loches 10 auf der dritten Kreisbahn 4 und Di der Gesamtdurchmesser der Lochplatte 6. Insbesondere können die Löcher 10 der dritten Kreisbahn 4 kleiner ausgebildet sein als die Löcher 9 der zweiten Kreisbahn 3 und besonders bevorzugt auch kleiner ausgebildet sein als die Löcher 8 der ersten Kreisbahn 2.

Die Löcher 10 weisen ausgehend von ihrem jeweiligen Mittelpunkt Z einen Abstand $L_{10}$ zur Längsachse der Lochplatte 6 auf. Das Verhältnis dieses Abstandes $L_{10}$ gegenüber dem Durchmesser $D_i$ der Lochplatte 6, also $L_{10}/D_i$ beträgt vorzugsweise zwischen 0,34 und 0,37, besonders bevorzugt zwischen 0,356 und 0,362, insbesondere 0,359. Besonders bevorzugt können die Löcher 10 der zweiten Kreisbahn 4 um weniger als 2% vom Durchmesser des zentralen Loches 1 abweichen.

Ausgehend von der dritten Kreisbahn 4 ist in radialer Richtung eine vierte Kreisbahn 5 angeordnet, auf der insgesamt 40 Löcher 11 symmetrisch um das zentrale Loch 1 herum angeordnet sind. Die Löcher 11 auf der vierten Kreisbahn 5 können ein Verhältnis $r_{11}/D_i$ von vorzugsweise weniger als 0,030 aufweisen; besonders bevorzugt von 0,026 bis 0,028; insbesondere von 0,027. Dabei ist r11 der Radius eines jeweiligen Loches 11 auf der vierten Kreisbahn 5 und Di der Gesamtdurchmesser der Lochplatte 6. Insbesondere können die Löcher 11 der vierten Kreisbahn 5 kleiner ausgebildet sein als die Löcher 8, 9, 10 der anderen Kreisbahnen 2, 3, 4 und das zentrale Loch 1.

Die Löcher 11 weisen ausgehend von ihrem jeweiligen Mittelpunkt Z einen Abstand $L_{11}$ zur Längsachse der Lochplatte 6 auf. Das Verhältnis dieses Abstandes $L_{11}$ gegenüber dem Durchmesser $D_i$ der Lochplatte 6, also $L_{11}/D_i$ beträgt vorzugsweise zwischen 0,42 und 0,47, besonders bevorzugt zwischen 0,445 und 0,449, insbesondere 0,447. Besonders bevorzugt können die Löcher 11 der vierten Kreisbahn 5 um 40-48%, insbesondere um 43-45% größer ausgestaltet sein als das zentrale Loch 1, bezogen auf die Lochdurchmesser.

Ganz besonders bevorzugt sind die Löcher auf der Lochplatte derart angeordnet, dass die Lochplatte bei Rotation um einem Winkel um die Längsachse mit sich selbst in Deckung gebracht werden kann. Dieser Winkel liegt vorzugsweise in einem Bereich zwischen 30-60°, insbesondere bei 45°.

Die Dicke der Platte beträgt vorzugsweise zwischen 10 bis 15% der Länge des Durchmessers der Lochplatte, besonders bevorzugt zwischen 0,11 - 0,13 $D_i$, insbesondere bei 0,12 $D_i$.

Der Druckabfall-Koeffizient für eine vollständig turbulente Region liegt zwischen 1,5 und 3, insbesondere zwischen 2,0 und 2,5 bei der Ausführungsvariante des erfindungsgemäßen Strömungsgleichrichters.

$$\zeta = \frac{2\Delta p}{\rho c^2}$$

Die Lochplatte weist eine näherungsweise kreisförmige Prallfläche auf, in der Draufsicht und im Schnitt.

Die Weiterbildungen sind einer Weiterbildung der Erfindung gemäß so zusammengestellt, insbesondere sind die oben genannten Maße so gewählt, dass eine Durchtrittsfläche durch die Prallfläche, gebildet durch die Löcher, in einem Verhältnis zwischen 0,4 und 0,5, vorzugsweise in einem Verhältnis zwischen 0,43 und 0,47, zur Prallfläche steht.

Ein erfindungsgemäßer Strömungsgleichrichters wird z. B. stromaufwärts vor einem Durchflussmessgerät, insbesondere ein Durchflussmessgerät der industriellen Prozessmesstechnik, beispielsweise ein Thermischer Massenstrommesser, in eine Rohrleitung eingesetzt. Diese Verwendung ist beispielsweise zur Verringerung einer so genannten Einlauflänge vor dem Durchflussmessgerät, z. B. nach einer Krümmung der Rohrleitung, also stromabwärts einer Krümmung der Rohrleitung, sinnvoll. Die Länge der Strecke parallel zur Hauptströmungsrichtung des Fluids in der Rohrleitung, meistens entlang der Rohrleitungslängsachse, zwischen dem Strömungsgleichrichter und dem Durchflussmessgerät beträgt dann beispielsweise weniger als 3·D. Die gleichermaßen bemessene Länge der Strecke zwischen dem Ende der Rohrkrümmung und des Strömungsgleichrichters beträgt beispielsweise weniger als 5·D. Besonders geeignet sind erfindungsgemäße Strömungsgleichrichter bei Strömungen im laminaren, transistenten und turbulenten Bereich, insbesondere für Gase.

**Bezugszeichenliste**

1      zentrales Loch
2 -5   Kreisbahnen
6      Lochplatte
8-11   Löcher

**Patentansprüche**

1.  Strömungsgleichrichter umfassend eine Lochplatte (6) mit einem zentralen Loch (1) und vier oder mehr radial dazu angeordnete Kreisbahnen (2-5) die konzentrisch zueinander angeordnet sind, wobei auf diesen konzentrischen Kreisbahnen (2-5) Löcher (8-11) angeordnet sind, wobei die überwiegende Zahl der Löcher (9, 10) einer mittleren Kreisbahn (3, 4) einen größeren Lochdurchmesser gegenüber der überwiegenden Zahl an Löcher (8) der innersten und der überwiegenden Zahl an Löcher (11) der äußersten Kreisbahn (2, 5) aufweist und dass ausgehend vom zentralen Loch (1) die innerste Kreisbahn (2) mit mehreren Löchern (8) angeordnet ist, wobei

    das Verhältnis $r_8/D_i$ also das Verhältnis des Radius eines jeweiligen Loches (8) dieser innersten Kreisbahn (2) bezogen auf Di den Gesamtdurchmesser der Lochplatte (6),
    um 2-10% grösser ist als
    das Verhältnis $r_1/D_i$ also das Verhältnis des Radius des zentralen Loches (1) bezogen auf Di den Gesamtdurchmesser der Lochplatte (6).

2.  Strömungsgleichrichter nach Anspruch 1, **dadurch gekennzeichnet, dass** die Löcher (8-11) zylindrisch in der Lochplatte (6) ausgebildet sind

3.  Strömungsgleichrichter nach einem der vorhergehenden Ansprüche, **dadurch gekennzeichnet, dass** ausgehend vom zentralen Loch (1) die innerste Kreisbahn (2) mit den mehreren Löchern (8) angeordnet ist, wobei

das Verhältnis $r_8/D_i$ also das Verhältnis des Radius eines Loches (9) einer dieser innersten Kreisbahn (2) nachfolgenden zweiten Kreisbahn (3) bezogen auf Di den Gesamtdurchmesser der Lochplatte (6),
um 2-10% grösser ist als
das Verhältnis $r_{10}/D_i$ also das Verhältnis des Radius eines Loches (10) einer der nachfolgenden zweiten Kreisbahn (3) in radialer Richtung nachfolgenden dritten Kreisbahn bezogen auf Di den Gesamtdurchmesser der Lochplatte (6).

4. Strömungsgleichrichter nach einem der vorhergehenden Ansprüche, insbesondere nach Anspruch 3, **dadurch gekennzeichnet, dass** das Verhältnis $r_9/D_i$ also das Verhältnis des Radius eines jeweiligen Loches (9 und/oder 10) einer mittleren Kreisbahn (3 oder 4) bezogen auf Di den Gesamtdurchmesser der Lochplatte (6),

um 30 - 60 % grösser ist als
das Verhältnis $r_{11}/D_i$ also das Verhältnis des Radius des Loches (11) der äußersten Kreisbahn (11) bezogen auf Di den Gesamtdurchmesser der Lochplatte (6).

5. Strömungsgleichrichter nach einem der vorhergehenden Ansprüche, **dadurch gekennzeichnet, dass** die Löcher (11) der radial äußersten Kreisbahn (5) den kleinsten Lochdurchmesser aufweisen.

6. Strömungsgleichrichter nach einem der vorhergehenden Ansprüche, **dadurch gekennzeichnet, dass** die Löcher (8-11) auf den jeweiligen Kreisbahnen (2-5) derart angeordnet sind, dass die Lochplatte (2) bei Rotation um die Längsachse um einen Winkel zwischen 30-60° auf sich selbst abgebildet werden kann.

7. Strömungsgleichrichter nach einem der vorhergehenden Ansprüche, **dadurch gekennzeichnet, dass** die Dicke der Lochplatte (6) zwischen 10 bis 15% der Länge des Durchmessers der Lochplatte (6) beträgt.

8. Strömungsgleichrichter nach einem der vorhergehenden Ansprüche, **dadurch gekennzeichnet, dass** auf der radial innersten Kreisbahn (2) acht Löcher (8) angeordnet sind.

9. Strömungsgleichrichter nach einem der vorhergehenden Ansprüche, **dadurch gekennzeichnet, dass** auf einer Kreisbahn (2-5) jeweils nur Löcher (8-11) mit einheitlichem Lochdurchmesser angeordnet sind.

10. Strömungsgleichrichter nach einem der vorhergehenden Ansprüche, **dadurch gekennzeichnet, dass** die Löcher (8-11) der Lochplatte (6) einen kreisförmigen Umfang aufweisen.

11. Strömungsgleichrichter nach einem der vorhergehenden Ansprüche, **dadurch gekennzeichnet, dass** abgesehen vom zentralen Loch (1), die Löcher (8-11) jeder Kreisbahn (2-5) einen anderen Lochdurchmesser aufweisen als die Löcher (8-11) der anderen Kreisbahnen (2-5).

12. Durchflussmessgerät mit einem Strömungsgleichrichter gemäß einem der vorhergehenden Ansprüche.

## Claims

1. Flow conditioner comprising a perforated plate (6) with a central hole (1) and four or more circular paths (2-5) arranged in a radial manner in relation to the central hole, said paths being arranged concentrically in relation to one another, wherein holes (8-11) are arranged on these concentric circular paths (2-5), wherein the majority of the holes (9, 10) of a central circular path (3, 4) have a larger hole diameter in relation to the majority of the holes (8) of the innermost circular path (2) and the majority of the holes (11) of the outermost circular path (5), and that, starting from the central hole (1), the innermost circular path (2) is arranged with multiple holes (8), wherein the ratio $r_8/Di$, i.e. the ratio of the radius of a hole (8) of this innermost circular path (2) to Di, the total diameter of the perforated plate (6), is 2-10% greater than the ratio $r_1/Di$, i.e. the ratio of the radius of the central hole (1) to Di, the total diameter of the perforated plate (6).

2. Flow conditioner as claimed in Claim 1, **characterized in that** the holes (8-11) are cylindrical in form in the perforated plate (6).

3. Flow conditioner as claimed in one of the previous claims, **characterized in that,** starting from the central hole (1), the innermost circular path (2) is arranged with the several holes (8), wherein the ratio $r_8/Di$, i.e. the ratio of the radius of a hole (9) of a second circular path (3) following this innermost circular path (2) to Di, the total diameter of the perforated plate (6), is 2-10 % greater than the ratio $r_{10}/Di$, i.e. the ratio of the radius of a hole (10) of a third circular path that follows the second circular path (3) in a radial direction to Di, the total diameter of the perforated plate (6).

4. Flow conditioner as claimed in one of the previous claims, particularly Claim 3, **characterized in that** the ratio $r_9/Di$, i.e. the ratio of the radius of a hole (9 and/or 10) of a central circular path (3 or 4) to Di, the total diameter of the perforated plate (6),

is 30-60 % greater than the

ratio $r_{11}/Di$, i.e. the ratio of the radius of the hole (11) of the outermost circular path (11) to Di, the total diameter of the perforated plate (6).

5. Flow conditioner as claimed in one of the previous claims, **characterized in that** the holes (11) of the radially outermost circular path (5) has the smallest hole diameter.

6. Flow conditioner as claimed in one of the previous claims, **characterized in that** the holes (8-11) on the circular paths (2-5) are arranged in such a way that the perforated plate (2) can be mapped onto itself when rotated around the longitudinal axis by an angle of between 30° and 60°.

7. Flow conditioner as claimed in one of the previous claims, **characterized in that** the thickness of the perforated plate (6) is between 10 and 15% of the length of the diameter of the perforated plate (6).

8. Flow conditioner as claimed in one of the previous claims, **characterized in that** eight holes (8) are arranged on the radially innermost circular path (2).

9. Flow conditioner as claimed in one of the previous claims, **characterized in that** only holes (8-11) with a uniform hole diameter are arranged on a circular path (2-5).

10. Flow conditioner as claimed in one of the previous claims, **characterized in that** the holes (8-11) of the perforated plate (6) have a circular circumference.

11. Flow conditioner as claimed in one of the previous claims, **characterized in that,** apart from the central hole (1), the holes (8-11) of each circular path (2-5) have a different hole diameter to the holes (8-11) of the other circular paths (2-5).

12. Flowmeter with a flow conditioner as claimed in one of the previous claims.

**Revendications**

1. Tranquillisateur de débit comprenant une plaque perforée (6) avec un trou central (1) et quatre trajectoires circulaires (2-5) ou plus, disposées de façon radiale par rapport au trou central, lesquelles trajectoires sont disposées de façon concentriques les unes par rapport aux autres, des trous (8-11) étant disposés sur ces trajectoires circulaires (2-5) concentriques, la grande majorité des trous (9, 10) d'une trajectoire circulaire (3, 4) centrale présentant un diamètre de trou supérieur à la grande majorité des trous (8) de la trajectoire circulaire la plus intérieure (2) et à la grande majorité des trous (11) de la trajectoire circulaire la plus extérieure (5), et la trajectoire circulaire la plus intérieure (2) étant disposée avec plusieurs trous (8) à partir du trou central (1), le rapport $r_8/Di$, c'est-à-dire le rapport entre le rayon d'un trou (8) de cette trajectoire circulaire la plus intérieure (2) et Di, le diamètre total de la plaque perforée (6),

étant de 2 à 10 % plus grand que

le rapport $r_1/Di$, c'est-à-dire le rapport entre le rayon du trou central (1) et Di, le diamètre total de la plaque perforée (6).

2. Tranquillisateur de débit selon la revendication 1, **caractérisé en ce que** les trous (8-11) sont de forme cylindrique dans la plaque perforée (6).

3. Tranquillisateur de débit selon l'une des revendications précédentes, **caractérisé en ce que** la trajectoire circulaire la plus intérieure (2) est disposée avec plusieurs trous (8) à partir du trou central (1), le rapport $r_8/Di$, c'est-à-dire le rapport entre le rayon d'un trou (9) d'une deuxième trajectoire circulaire (3) suivant cette trajectoire circulaire la plus intérieure (2) et Di, le diamètre total de la plaque perforée (6),

est de 2 à 10 % supérieur au

rapport $r_{10}/Di$, c'est-à-dire le rapport entre le rayon d'un trou (10) d'une troisième trajectoire circulaire suivant en direction radiale la deuxième trajectoire circulaire (3) et Di, le diamètre total de la plaque perforée (6).

4. Tranquillisateur de débit selon l'une des revendications précédentes, notamment la revendication 3, **caractérisé en ce que** le rapport rg/Di, c'est-à-dire le rapport entre le rayon d'un trou (9 et/ou 10) d'une trajectoire circulaire centrale (3 ou 4) et Di, le diamètre total de la plaque perforée (6),

est de 30 à 60 % supérieur au

rapport $r_{11}/Di$, c'est-à-dire le rapport entre le rayon du trou (11) de la trajectoire circulaire la plus extérieure (11) et Di, le diamètre total de la plaque perforée (6).

5. Tranquillisateur de débit selon l'une des revendications précédentes, **caractérisé en ce que** les trous (11) de la trajectoire circulaire extérieure (5) radiale présentent les diamètres de trou les plus petits.

6. Tranquillisateur de débit selon l'une des revendications précédentes, **caractérisé en ce que** les trous (8-11) sont disposés sur les trajectoires circulaires (2-5) respectives de telle sorte que la plaque perforée (2) peut être projetée sur elle-même selon un angle compris entre 30 et 60° lorsqu'elle tourne autour de l'axe longitudinal.

7. Tranquillisateur de débit selon l'une des revendications précédentes, **caractérisé en ce que** l'épaisseur de la plaque perforée (6) représente entre 10 et 15 % de la longueur du diamètre de la plaque perforée.

8. Tranquillisateur de débit selon l'une des revendications précédentes, **caractérisé en ce que** sont disposés huit trous (8) sur la trajectoire circulaire intérieure (2) radiale.

9. Tranquillisateur de débit selon l'une des revendications précédentes, **caractérisé en ce que** sont disposés, sur une trajectoire circulaire (2-5), exclusivement des trous (8-11) résantant un diamètre de trou uniforme.

10. Tranquillisateur de débit selon l'une des revendications précédentes, **caractérisé en ce que** les trous (8-11) de la plaque perforée (6) présentent un périmètre circulaire.

11. Tranquillisateur de débit selon l'une des revendications précédentes, **caractérisé en ce que**, hormis le trou central (1), les trous (8-11) de chaque trajectoire circulaire (2-5) présentent un diamètre différent de celui des trous (8-11) des autres trajectoires circulaires (2-5).

12. Débitmètre avec un tranquillisateur de débit selon l'une des revendications précédentes.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3840051 A
- US 5341848 A
- DE 102006046252 A1
- US 5529093 A
- DE 69903987 T2

**In der Beschreibung aufgeführte Nicht-Patentliteratur**

- **B. MICKAN ; G. PEREIRA ; J. WU ; D. DOPHEIDE.** *A new concept of flow conditioner under test*